# EUROPEAN PATENT APPLICATION

(11) **EP 3 451 432 A1**
(43) Date of publication of application: **06.03.2019**
(21) Application number: 17786033.5
(22) Date of filing: 20.04.2017
(51) Int. Cl.: H01M 10/0567, H01M 4/36, H01M 4/505, H01M 10/052

(54) **LITHIUM SECONDARY CELL AND METHOD FOR MANUFACTURING LITHIUM SECONDARY CELL**

(30) Priority: 21.04.2016 JP 2016085554
(71) Applicant: Hitachi High-Technologies Corporation, Tokyo 105-8717 (JP)
(72) Inventor: HARUNA Hiroshi, Tokyo 100-8280 (JP); TAKAHASHI Shin, Tokyo 100-8280 (JP)
(74) Representative: MERH-IP Matias Erny Reichl Hoffmann Patentanwälte PartG mbB
(86) International application number: PCT/JP2017/015931
(87) International publication number: WO 2017/183696

(57) **Abstract**

The present invention provides a high capacity lithium secondary cell in which the decrease in capacity associated with the charge and discharge cycle is small, and a method for manufacturing the lithium secondary cell. This lithium secondary cell is characterized in being provided with a positive electrode containing a lithium-transition metal composite oxide for which lithium ions can be reversibly stored and released, a negative electrode, and a non-aqueous electrolyte; the non-aqueous electrolyte containing a boroxine compound represented by the general formula (RO)₃(BO)₃ (where each R independently represents a C2-6 organic group); and the value of the ratio of the number of moles of the boroxine compound and the number of moles of the transition metal atoms in the lithium-transition metal composite oxide being 5.7 x 10⁻³ or less. This method for manufacturing a lithium secondary cell is characterized in that the boroxine compound is added to the non-aqueous electrolyte so that the ratio value of the mol number of the boroxine compound and the mol number of the transition metal atoms in the lithium-transition metal composite oxide is 5.7 x 10⁻³ or less.

## Description

### Technical Field

The present invention relates to a lithium secondary cell and a method for manufacturing the lithium secondary cell.

### Background Art

Lithium secondary cells are widely put to practical use in fields such as mobile communication power sources for mobile phones and portable personal computers or the like, power sources for household electrical appliances, stationary power sources (such as power storage devices and uninterruptible power supply devices), and driving power sources for vessels, railways, and automobiles or the like. The capacity and output or the like of the lithium secondary cell are known to decrease as charge and discharge are repeated. A lithium secondary cell is, therefore, required, which has small deterioration in battery performance with time and excellent cycle characteristics.

Conventionally, as a technique of suppressing deterioration in the battery performance of a lithium secondary cell with time, a technique of adding a boroxine compound having a boroxine ring to an electrolyte (electrolytic solution) has been proposed.

For example, PTL 1 discloses a non-aqueous electrolyte secondary cell including a negative electrode, a positive electrode, a separator, and a non-aqueous electrolyte, wherein: the negative electrode contains an active material in which the desorption and insertion of lithium ions progress at 0.3 V (vs. Li⁺/Li) or more and 2.0 V (vs. Li⁺/Li) or less; and the non-aqueous electrolyte contains an organic boron compound. In PTL 1, the concentration of the organic boron compound may be in the range of 0.005 mol/L or more and 20 mol/L or less (see Paragraph 0100).

PTL 2 discloses a non-aqueous electrolyte secondary cell including a positive electrode, a negative electrode, a separator, and a non-aqueous electrolyte in which a lithium salt is dissolved in a non-aqueous solvent, wherein the non-aqueous electrolyte contains a compound having a boroxine ring and having a (poly)alkylene oxide chain. In PTL 2, the addition amount of the compound having a boroxine ring is preferably in the range of 0.005 to 0.3 mol based on 1 mol of LiPF₆ contained in an electrolytic solution (see Paragraph 0030).

PTL 3 discloses a non-aqueous electrolyte secondary cell including a positive electrode, a negative electrode, a separator, and a non-aqueous electrolyte in which a lithium salt is dissolved in a non-aqueous solvent, wherein the non-aqueous electrolyte contains a compound having a boroxine ring and having a (poly)alkyleneoxide chain. In PTL 3, the amount of the boroxine compound is desirably 0.1% by weight to 1.0% by weight based on the total amount of LiPF₆ and the non-aqueous solvent (see Paragraph 0034).

### Citation List

### Patent Literature

PTL 1: JP 2012-156087 A
PTL 2: JP 2003-168476 A
PTL 3: JP 2015-041531 A

### Summary of Invention

### Technical Problem

In the secondary cells described in PTLs 1 to 3, the appropriate addition amount of the boroxine compound is defined based on the total amount of the electrolytic solution, that is, the amount of LiPF₆ as the electrolyte and the amount of the non-aqueous solvent. However, the total amount of the electrolytic solution used in the lithium secondary cell is generally set in accordance with the capacity of the cell in many cases. Accordingly, when the boroxine compound is applied to lithium secondary cells having various capacities, the addition amount of the boroxine compound is increased or decreased according to the total amount of the electrolytic solution.

However, the boroxine compound per se is apt to cause a reaction such as decomposition in the electrolytic solution. Therefore, when the addition amount of the boroxine compound is not appropriate, the composition of the electrolytic solution may largely change over time. At this time, as disclosed in PTL 1, when the operating voltage of the lithium secondary cell is restricted, the decomposition of the boroxine compound can be suppressed, but there is a high possibility that high capacity cannot be obtained. Further improvement in cycle characteristics of the lithium secondary cells is desired regardless of capacity.

It is therefore an object of the present invention to provide a high capacity lithium secondary cell in which the decrease in capacity associated with the charge and discharge cycle is small, and a method for manufacturing the same.

### Solution to Problem

In order to solve the above problems, a lithium secondary cell according to the present invention includes: a positive electrode containing a lithium-transition metal composite oxide for which lithium ions can be reversibly stored and released; a negative electrode; and an electrolytic solution, wherein: the electrolytic solution contains a boroxine compound represented by the general formula: (RO)₃(BO)₃, wherein R each independently represents a C2-6 organic group; and a ratio value of the number of moles of the boroxine compound and the number of moles of transition metal atoms in the lithium-transition metal composite oxide is 5.7 × 10⁻³ or less.

Another lithium secondary cell according to the present invention includes: a positive electrode containing a lithium-transition metal composite oxide for which lithium ions can be reversibly stored and released; a negative electrode; and an electrolytic solution, wherein: the electrolytic solution contains a phosphate compound represented by the general formula: POₓF_{y}; and a ratio value of the number of moles of the phosphate compound and the number of moles of transition metal atoms in the lithium-transition metal composite oxide is 1.6 × 10⁻³ or less.

A method for manufacturing a lithium secondary cell according to the present invention, the lithium secondary cell including: a positive electrode containing a lithium-transition metal composite oxide for which lithium ions can be reversibly stored and released; a negative electrode; and an electrolytic solution, the method including the step of adding a boroxine compound represented by the general formula: (RO)₃(BO)₃, wherein R each independently represents a C2-6 organic group to the electrolytic solution so that a ratio value of the number of moles of the boroxine compound and the number of moles of transition metal atoms in the lithium-transition metal composite oxide is 5.7 × 10⁻³ or less.

### Advantageous Effects of Invention

The present invention makes it possible to provide a high capacity lithium secondary cell in which the decrease in capacity associated with the charge and discharge cycle is small, and a method for manufacturing the same.

### Brief Description of Drawings

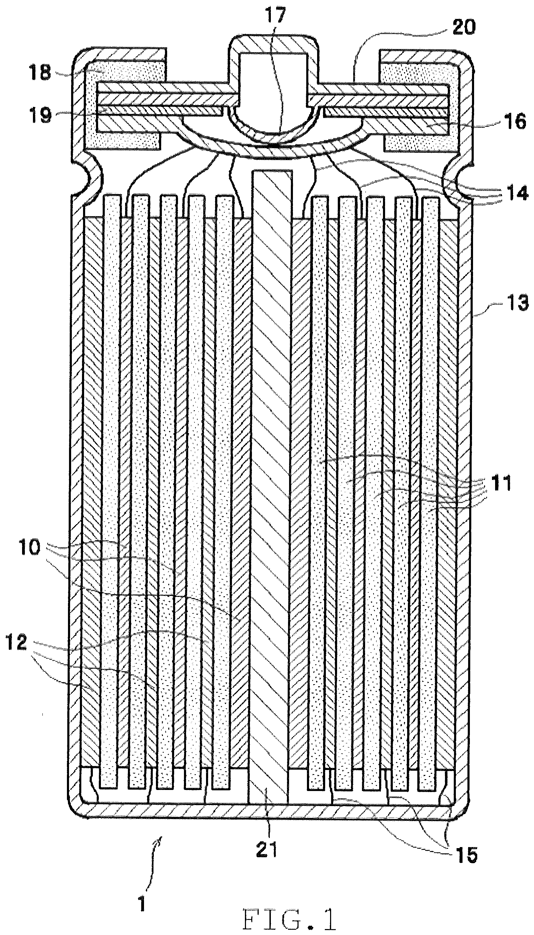

[FIG. 1] FIG. 1 is a cross-sectional view schematically showing the structure of a lithium secondary cell according to one embodiment of the present invention.

### Description of Embodiments

Hereinafter, a lithium secondary cell according to an embodiment of the present invention and a method for manufacturing the same will be described in detail. The following description shows specific examples for the content of the invention but the invention is not limited to such description. The present invention can be variously modified by a person skilled in the art within the range of the technical idea disclosed in the present specification.

### <Battery Structure>

FIG. 1 is a cross-sectional view schematically showing the structure of a lithium secondary cell according to an embodiment of the present invention.

As shown in FIG. 1, a lithium secondary cell 1 according to the present embodiment includes a positive electrode 10, a separator 11, a negative electrode 12, a cell container 13, a positive electrode current collecting tab 14, a negative electrode current collecting tab 15, an inner lid 16, an inner pressure relief valve 17, a gasket 18, a positive temperature coefficient (PTC) resistor element 19, a cell lid 20, and an axial core 21. The cell lid 20 is an integrated part including the inner lid 16, the inner pressure relief valve 17, the gasket 18, and the resistor element 19.

The positive electrode 10 and the negative electrode 12 are provided in a sheet form, and are stacked on each other with the separator 11 interposed therebetween. A cylindrical electrode group is formed by winding the positive electrode 10, the separator 11, and the negative electrode 12 around the axial core 21.

The axial core 21 can be provided so as to have an optional cross-sectional shape suitable for supporting the positive electrode 10, the separator 11 and the negative electrode 12. Examples of the cross-sectional shape include a cylindrical shape, a columnar shape, a rectangular tube shape, and a rectangular shape. The axial core 21 can be formed of any material having good insulating properties. Examples of the material of the axial core 21 include polypropylene and polyphenylene sulfide.

The cell container 13 can be formed of a material having corrosion resistance with respect to an electrolytic solution, for example, aluminum, stainless steel, nickel-plated steel, or the like. When the cell container 13 is electrically connected to the positive electrode 10 or the negative electrode 12, the material for the cell container 13 is selected such that the corrosion of the cell container 13 and the denaturation of the material due to alloying with lithium do not occur in a portion in contact with the electrolytic solution. The inner surface of the cell container 13 may be subjected to a surface processing treatment for improving corrosion resistance and adhesion.

The positive electrode current collecting tab 14 and the negative electrode current collecting tab 15 for leading out a current are respectively connected to the positive electrode 10 and the negative electrode 12 by spot welding, ultrasonic welding, or the like. The electrode group provided with the positive electrode current collecting tab 14 and the negative electrode current collecting tab 15 is housed in the cell container 13. The positive electrode current collecting tab 14 is electrically connected to the bottom surface of the cell lid 20. The negative electrode current collecting tab 15 is electrically connected to the inner wall of the cell container 13. As shown in FIG. 1, a plurality of positive electrode current collecting tabs 14 and a plurality of negative electrode current collecting tabs 15 may be provided for the electrode group. Such provision makes it possible to cope with a large current.

The electrolytic solution (non-aqueous electrolyte) is injected into the cell container 13. A method for injecting the electrolytic solution may be a method for directly injecting the electrolytic solution in a state where the cell lid 20 is opened, or a method for injecting the electrolytic solution from an injection port provided in the cell lid 20 in a state where the cell lid 20 is closed, or the like. The opening of the cell container 13 is hermetically sealed by joining the cell lid 20 by welding, caulking or the like. The inner pressure relief valve 17 is provided in the cell lid 20, and is opened when the inner pressure of the cell container 13 excessively rises.

### <Positive Electrode>

The positive electrode 10 contains a lithium-transition metal composite oxide as a positive electrode active material for which lithium ions can be reversibly stored and released. The positive electrode 10 includes, for example, a positive electrode mixture layer containing a positive electrode active material, a conductive agent, and a binder, and a positive electrode current collector having one surface or both surfaces coated with the positive electrode mixture layer. The lithium-transition metal composite oxide which is the positive electrode active material may be contained in the state of primary particles, or may be contained in a state where secondary particles are formed.

As the lithium-transition metal composite oxide, an appropriate type of positive electrode active material used in a general lithium secondary cell can be used. However, it is preferable that the lithium-transition metal composite oxide contains at least one transition metal selected from the group consisting of manganese (Mn), cobalt (Co), and nickel (Ni).

Specific examples of the lithium-transition metal composite oxide include LiCoO₂, LiNiO₂, and LiMn₂O₄. There can be used LiMnO₃, LiMn₂O₃, LiMnO₂, Li₄Mn₅O₁₂, LiMn₂₋ₓM1ₓO₂ (M1 is at least one metal element selected from the group consisting of Co, Ni, Fe, Cr, Zn, and Ti, x = 0.01 to 0.2 is satisfied), Li₂Mn₃M2O₈ (M2 is at least one metal element selected from the group consisting of Fe, Co, Ni, Cu, and Zn), Li_{1-y}A_{y}Mn₂O₄ (A is at least one selected from the group consisting of Mg, B, Al, Fe, Co, Ni, Cr, Zn, and Ca, y = 0.01 to 0.1 is satisfied), LiNi_{1-z}M2_{z}O₂ (M2 is at least one selected from the group consisting of Mn, Fe, Co, Al, Ga, Ca, and Mg, z = 0.01 to 0.2 is satisfied), LiCo₁₋ᵥM3ᵥO₂ (M3 is at least one selected from the group consisting of Ni, Fe, and Mn, z = 0.01 to 0.2 is satisfied), LiFeO₂, Fe₂(SO₄)₃, Fe(MoO₄)₃, FeF₃, LiFePO₄, and LiMnPO₄ or the like.

As the conductive agent, carbon particles and carbon fibers or the like made of graphite, carbon black, acetylene black, Ketjen black, channel black or the like can be used. These conductive agents may be used singly or in combination of two or more. The amount of the conductive agent is preferably 5% by mass or more and 20 % by mass or less based on the positive electrode active material. When the amount of the conductive agent is in such a range, good conductivity can be obtained, and high capacity can also be secured.

Examples of the binder which can be used include suitable materials such as polyvinylidene fluoride (PVDF), polytetrafluoroethylene, polychlorotrifluoroethylene, polypropylene, polyethylene, an acrylic polymer, a polymer having imide or an amide group, and copolymers thereof. These binders may be used singly or in combination of two or more. A thickening binder such as carboxymethyl cellulose may also be used in combination. The amount of the binder is preferably 1% by mass or more and 7% by mass or less based on the total amount of the positive electrode active material, the conductive agent, and the binder. When the amount of the binder is in such a range, the capacity is less likely to decease, and the internal resistance is less likely to excessively increase. The coatability and formability of the positive electrode mixture layer and the strength of the positive electrode mixture layer are less likely to be impaired.

As the positive electrode current collector, for example, appropriate materials such as a metal foil, a metal plate, a foamed metal plate, an expanded metal, and a punching metal which are made of aluminum, stainless steel, and titanium or the like can be used. The metal foil may be, for example, a perforated foil perforated so as to have a hole diameter of about 0.1 mm or more and 10 mm or less. The thickness of the metal foil is preferably 10 µm or more and 100 µm or less.

The positive electrode 10 can be prepared by, for example, mixing a positive electrode active material, a conductive agent, a binder, and an appropriate solvent to prepare a positive electrode mixture, and coating the positive electrode mixture on a positive electrode current collector, followed by drying and compression molding. As a method for coating the positive electrode mixture, for example, a doctor blade method, a dipping method, and a spray method, or the like can be used. As a method for subjecting the positive electrode mixture to compression molding, for example, a roll press or the like can be used.

The thickness of the positive electrode mixture layer can be set to an appropriate thickness in consideration of the specification of the lithium secondary cell to be manufactured and the balance with the negative electrode, but when the positive electrode mixture is coated on both the surfaces of the positive electrode current collector, the thickness of the positive electrode mixture layer is preferably 50 µm or more and 200 µm or less. The thickness of the positive electrode mixture layer can be set according to specifications such as the capacity and resistance value of the lithium secondary cell, but this coating amount is less likely to cause an excessive distance between electrodes, and distribution for a reaction in which lithium ions are stored and released.

The particle size of the positive electrode active material is usually equal to or less than the thickness of the positive electrode mixture layer. When coarse particles are present in the powder of the synthesized positive electrode active material, it is preferable to previously subject the powder to sieve separation or wind stream separation or the like to set the average particle size of the positive electrode active material to be smaller than the thickness of the positive electrode mixture layer.

The density of the positive electrode mixture layer can be set to an appropriate density in consideration of the specification of the lithium secondary cell to be manufactured and the balance with the negative electrode, but from the viewpoint of securing the capacity of the lithium secondary cell, the density of the positive electrode mixture layer is preferably 60% or more of the true density.

### <Separator>

The separator 11 is provided to prevent short-circuit caused by direct contact between the positive electrode 10 and the negative electrode 12. As the separator 11, a microporous film made of polyethylene, polypropylene, an aramid resin or the like, or a film obtained by coating a heat resistant substance such as alumina particles on the surface of the microporous film, or the like can be used. The positive electrode 10 and the negative electrode 12 themselves may have the function of the separator 11 such that the battery performance is not impaired.

### <Negative Electrode>

The negative electrode 12 contains a negative electrode active material capable of reversibly storing and releasing lithium ions. The negative electrode 12 contains, for example, a negative electrode active material, a binder, and a negative electrode current collector.

As the negative electrode active material, an appropriate type of negative electrode active material used in a general lithium secondary cell can be used. Specific examples of the negative electrode active material include an easily graphitizable material obtained from natural graphite, petroleum coke, or pitch coke treated at a high temperature of 2,500°C or higher, mesophase carbon, amorphous carbon, graphite coated at the surface with amorphous carbon, a carbon material with the surface crystallinity being lowered by mechanically treating the surface of natural or artificial graphite, a material formed by coating and adsorbing an organic material such as a polymer on carbon surface, a carbon fiber, metal lithium, an alloy of lithium with aluminum, tin, silicon, indium, gallium, or magnesium or the like, a material in which a metal is supported on the surface of silicon particles or carbon particles, and an oxide of a metal such as tin, silicon, iron, or titanium. Examples of the metal to be supported include lithium, aluminum, tin, silicon, indium, gallium, magnesium, and alloys thereof.

The negative electrode active material is particularly preferably a negative electrode active material capable of reversibly storing and releasing lithium ions at a potential of 0.3 V (vs Li⁺/Li) or less. The lithium secondary cell according to the present embodiment has cycle characteristics improved even in such a voltage range, and can realize high capacity and output.

As the binder, any of an aqueous binder which is dissolved, swollen, or dispersed in water, and an organic binder which is not dissolved, swollen, or dispersed in water can be used. Specific examples of the aqueous binder include a styrene-butadiene copolymer, an acrylic polymer, a polymer having a cyano group, and copolymers thereof. Specific examples of the organic binder include polyvinylidene fluoride (PVDF), polytetrafluoroethylene, and copolymers thereof. These binders may be used singly or in combination of two or more. A thickening binder such as carboxymethyl cellulose may also be used in combination.

The amount of the aqueous binder is preferably 0.8% by mass or more and 1.5% by mass or less based on the total amount of the negative electrode active material and the binder. On the other hand, the content of the organic binder is preferably 3% by mass or more and 6% by mass or less based on the total amount of the negative electrode active material and the binder. The amount of the binder in such a range is less likely to cause a decreased battery capacity and excessive internal resistance. The coatability and formability of the negative electrode mixture layer and the strength of the negative electrode mixture layer are less likely to be impaired.

As the negative electrode current collector, a suitable material such as a metal foil, a metal plate, a foamed metal plate, an expanded metal, or a punching metal made of copper, a copper alloy containing copper as a main component, or the like can be used. The metal foil may be, for example, a perforated foil perforated so as to have a hole diameter of about 0.1 mm or more and 10 mm or less. The thickness of the metal foil is preferably 7 µm or more and 25 µm or less.

The negative electrode 12 can be prepared, for example, by mixing a negative electrode active material, a binder, and an appropriate solvent to prepare a negative electrode mixture, and coating the negative electrode mixture on a negative electrode current collector, followed by drying and compression molding. As a method for coating the negative electrode mixture, for example, a doctor blade method, a dipping method, and a spray method or the like can be used. As a method for subjecting the positive electrode mixture to compression molding, for example, a roll press or the like can be used.

The thickness of the negative electrode mixture layer can be set to an appropriate thickness in consideration of the specification of the lithium secondary cell to be manufactured and the balance with the positive electrode, but when the negative electrode mixture is coated on both the surfaces of the negative electrode current collector, the thickness of the negative electrode mixture layer is preferably 50 µm or more and 200 µm or less. The thickness of the negative electrode mixture layer can be set according to specifications such as the capacity and resistance value of the lithium secondary cell, but this coating amount is less likely to cause an excessive distance between electrodes, and distribution for a reaction in which lithium ions are stored and released.

### <Electrolytic Solution>

The electrolytic solution (non-aqueous electrolyte) contains an electrolyte, a boroxine compound, and a non-aqueous solvent. At least lithium hexafluorophosphate (LiPFₑ) is used as the electrolyte. As the electrolyte, only LiPF₆ may be used alone, or other lithium salts may be' used in combination. Examples of the other lithium salts used in combination with LiPF₆ include LiBF₄, LiClO₄, LiAsF₆, LiCF₃SO₂, Li(CF₃SO₂) ₂N, Li(C₂F₅SO₂)₂N, Li (F₂SO₂)₂N, LiF, Li₂CO₃, LiPF₄(CF₃)₂, LiPF₄ (CF₃SO₂)₂, LiBF₃(CF₃), and LiBF₂(CF₃SO₂)₂.

A lithium ion concentration in the electrolytic solution is preferably in the range of 0.6 mol/L or more and 1.5 mol/L or less. When the concentration is 0.6 mol/L or more, good ion conductivity can be realized. When the concentration is 1.5 mol/L or less, the resistance of ion conduction is suppressed to a low level, which also provides an increased reaction speed of lithium ions.

In detail, the boroxine compound is represented by the following general formula: (RO)₃(BO)₃ [wherein R each independently represents a C2-6 organic group].

Examples of the organic group (R) of the boroxine compound include a linear or branched alkyl group having 2 to 6 carbon atoms, and a cycloalkyl group. Specific examples of such an organic group (R) include an ethyl group, an n-propyl group, an isopropyl group, an n-butyl group, a sec-butyl group, an isobutyl group, and a cyclohexyl group. The organic group (R) may contain a halogen atom exemplified by a fluorine atom, a chlorine atom, or a bromine atom, a nitrogen atom, and a sulfur atom or the like.

Specific examples of the boroxine compound include triethoxyboroxine (O-CH₂CH₃)₃(BO)₃), triisopropoxyboroxine (O-CH(CH₃)₂)₃(BO)₃), and tricyclohexoxy boroxine ((O-C₆H₁₁)₃(BO)₃).

As the boroxine compound, a compound having a secondary alkyl group having 2 to 6 carbon atoms as the organic group (R) is preferable. When the organic group (R) is primary, the molecular structure of the boroxine compound is unstable, which tends to make it difficult to use the boroxine compound. When the organic group (R) is tertiary, the insolubility of the boroxine compound increases, which makes it difficult to dissolve the boroxine compound in the electrolytic solution. On the other hand, the organic group (R) is advantageously secondary in that the boroxine compound is hardly decomposed and appropriate solubility can also be obtained. As the boroxine compound, tri-iso-propoxyboroxine (TiPBx) is particularly suitably used.

The boroxine compound can be synthesized, for example, by the condensation reaction of B(OR)₃ with boric anhydride (B₂O₃). By using a compound having an OH group in addition to B(OR)₃, and changing the number of moles thereof for the reaction, (R₁O) (R₂O) (R₃O) (BO)₃ (R₁ to R₃ represent organic groups different from each other) having different organic groups in one molecule, or the like can be obtained.

As conventionally known, the boroxine compound has an action of interacting with lithium ions derived from LiPF₆ to improve the degree of dissociation of the lithium ions. Therefore, the electrolytic solution contains an appropriate amount of the boroxine compound with respect to the total amount of the electrolytic solution, whereby the capacity of the lithium secondary cell can be effectively improved.

On the other hand, the boroxine compound also has an action of reacting with the positive electrode active material to form a coating film on the surface of the positive electrode active material. This coating film contains a compound having a boron atom, particularly a compound having a B-O bond. That is, by the action of the boroxine compound, a part of the surface of the lithium-transition metal composite oxide interacts with a boron atom, to form a state of having the boron atom. The decomposition reaction of the non-aqueous solvent on the surface of the positive electrode active material is suppressed, which can provide an effect of improving the cycle characteristics of the lithium secondary cell. The lithium secondary cell according to the present embodiment mainly utilizes such newly found action of the boroxine compound.

In general, the optimum addition amount of an additive used in the lithium secondary cell is standardized as a ratio to the total amount of the electrolytic solution in many cases. For example, from the viewpoint of improving the degree of dissociation of lithium ions, as described above, the addition amount of the boroxine compound is defined by a mass fraction or the like with respect to the total amount of the electrolytic solution. Alternatively, as disclosed in PTLs 1 and 2, the addition amount of the boroxine compound is defined by a molar concentration per electrolytic solution, and a ratio with respect to an electrolyte, or the like. At this time, the total amount of the electrolytic solution is generally designed in consideration of the porosities of the positive electrode, the negative electrode, and the separator.

However, in consideration of the action of forming the coating film in the boroxine compound, the addition amount of the boroxine compound to the electrolytic solution should be suppressed to the extent that an excessive coating film is not formed on the surface of the positive electrode active material. This is because, when the excessive coating film is formed on the surface of the positive electrode active material by charge and discharge, the internal resistance of the lithium secondary cell is increased, which cannot provide high capacity and high output.

Particularly, in the lithium secondary cell, there is also a fact that the specification of a cell in which a relatively large amount of electrolytic solution is enclosed is advantageous. This is because the electrolytic solution is apt to be decomposed or volatilized, whereby a large amount of electrolytic solution is preferably enclosed to stabilize the initial characteristics and life of the lithium secondary cell. When such a battery specification is employed, a large amount of boroxine compound is also added to a large amount of electrolytic solution, whereby there is a high possibility that the excessive coating film is formed on the surface of the positive electrode active material.

That is, according to the conventional method in which the addition amount of the boroxine compound is defined by the ratio to the total amount of the electrolytic solution, an appropriate amount of coating film is not formed, and an effect provided by the addition of the boroxine compound is largely attenuated. Therefore, in the present embodiment, the addition amount of the boroxine compound to be added to the electrolytic solution is restricted to the optimum range with respect to not the total amount of the electrolytic solution but the amount of the positive electrode active material, whereby the cycle characteristics of the lithium secondary cell are effectively improved.

The addition amount of the boroxine compound to be added to the electrolytic solution is specifically defined based on the total number of moles of transition metal atoms in the lithium-transition metal composite oxide as the positive electrode active material. X-ray photoelectron spectroscopy (XPS) confirms that a boroxine compound forms a coating film with a transition metal atom present on the crystal surface of a lithium-transition metal composite oxide as a reaction point. Therefore, by restricting the addition amount based on the total number of moles of the transition metal atoms containing the transition metal atoms present on the crystal surface, and constituting the entire crystal of the positive electrode active material, the wide area covering of the particle surface of the positive electrode active material can be compensated without actually measuring the specific surface area or the like of the positive electrode active material.

Specifically, the addition amount of the boroxine compound to be added to the electrolytic solution is set such that the ratio value of the number of moles of the boroxine compound and the number of moles of the transition metal atoms in the lithium-transition metal composite oxide is 5.7 × 10⁻³ or less. When the addition amount of the boroxine compound is set as described above, the particles of the positive electrode active material having the normal particle size and specific surface area can be reliably coated with the minimum necessary coating film. This makes it possible to suppress reduction in capacity and output associated with charge and discharge without largely increasing the internal resistance. In particular, since the obtained effect is improved, the boroxine compound is suitably applied to a lithium secondary cell in which the upper limit of a driving voltage range is 3.5 V (vs. Li⁺/Li) or more, and preferably 4.0 V (vs. Li⁺/Li) or more.

The boroxine compound reacts with LiPF₆ used as an electrolyte in the electrolytic solution to form a compound having trivalent and higher valent, for example, tetravalent boron in one molecule, and a phosphate compound. Therefore, the number of moles of the boroxine compound in the electrolytic solution can be grasped as the combined number of moles of the number of moles of the unreacted boroxine compound and the number of moles of the compound formed after the reaction.

The ratio value of the number of moles of the boroxine compound in the electrolytic solution and the number of moles of the transition metal atoms in the lithium-transition metal composite oxide is preferably 1.0 × 10⁻³ or more and 5.7 × 10⁻³ or less, more preferably 1.6 × 10⁻³ or more and 5.7 × 10⁻³ or less, and still more preferably 3.2 × 10⁻³ or more and 5.7 × 10⁻³ or less. When the addition amount of the boroxine compound is secured to this extent, the action of forming the coating film can be significantly and favorably obtained, which can provide improved cycle characteristics of the lithium secondary cell.

From the viewpoint of improving the degree of dissociation of lithium ions, the addition amount of the boroxine compound to be added to the electrolytic solution is preferably 0.1% by mass or more and 1.0% by mass or less, and more preferably 0.3% by mass or more and 0.8% by mass or less, with respect to the total amount of LiPF₆ and the non-aqueous solvent. When the amount of the positive electrode active material with respect to the amount of the electrolytic solution is in the usual range, the range of the addition amount is equivalent to an amount greater than the addition amount defined based on the total number of moles of transition metal atoms in the lithium-transition metal composite oxide. On the other hand, when the amount of the positive electrode active material with respect to the amount of the electrolytic solution is smaller than the usual range, it is preferable to prevent the formation of the excessive coating film on the surface of the positive electrode active material, and to set the addition amount of the boroxine compound to an appropriate amount with respect to both the amount of the positive electrode active material and the amount of the electrolytic solution from the viewpoint of favorably improving the degree of dissociation of lithium ions.

The phosphate compound produced by the reaction between the boroxine compound and LiPF₆ has an action of fluorinating a part of the surface of the lithium-transition metal composite oxide. By the action of the phosphate compound, the decomposition reaction of the non-aqueous solvent on the surface of the positive electrode active material is suppressed, which can provide an effect of improving the cycle characteristics of the lithium secondary cell.

In detail, the phosphate compound is represented by the following general formula: POₓF_{y} [wherein x is 1 or more and 3 or less, and y is 1 or more and 5 or less]. The oxidation number of a phosphorus atom in the phosphate compound is 3 or 5.

Specific examples of the phosphate compound include a monofluorophosphate anion (PO₃F²⁻) and a difluorophosphate anion (PO₂F₂⁻, POF₂⁻).

From the viewpoint of obtaining the same effect as that of the addition of the boroxine compound, the phosphate compound may be added in the form of a salt of an alkali metal, an alkaline earth metal, or an earth metal or the like. Examples of the alkali metal include lithium, sodium, potassium, and cesium. Examples of the alkaline earth metal include magnesium, calcium, strontium, and barium. Examples of the earth metal include aluminum, gallium, indium, and thallium.

Specifically, the addition amount of the phosphate compound to be added to the electrolytic solution is preferably set such that the ratio value of the number of moles of the phosphate compound and the number of moles of the transition metal atoms in the lithium-transition metal composite oxide is 3.3 × 10⁻⁹ or less. The addition amount of the phosphate compound is set as described above, whereby at least the particles of the positive electrode active material having the normal particle size and specific surface area can be coated with the minimum necessary coating film. This makes it possible to suppress reduction in capacity and output associated with charge and discharge without largely increasing the internal resistance.

The ratio value of the number of moles of the phosphate compound in the electrolytic solution and the number of moles of the transition metal atoms in the lithium-transition metal composite oxide is preferably 0.5 × 10⁻³ or more and 1.6 × 10⁻³ or less, and more preferably 0.9 × 10⁻³ or more and 1.6 × 10⁻³ or less. When the addition amount of the phosphate compound is secured to this extent, the action of forming the coating film can be significantly and favorably obtained, which can provide improved cycle characteristics of the lithium secondary cell.

Examples of the non-aqueous solvent used in the electrolytic solution include a chain carbonate, a cyclic carbonate, a chain carboxylic acid ester, a cyclic carboxylic acid ester, a chain ether, a cyclic ether, an organic phosphorous compound, and an organic sulfur compound. These compounds may be used alone, or in combination of two or more.

Examples of the chain carbonate include dimethyl carbonate, ethyl methyl carbonate, diethyl carbonate, methyl propyl carbonate, and ethyl propyl carbonate. Examples of the cyclic carbonate include ethylene carbonate, propylene carbonate, vinylene carbonate, 1,2-butylene carbonate, and 2,3-butylene carbonate.

Examples of the chain carboxylic acid ester include methyl acetate, ethyl acetate, propyl acetate, butyl acetate, methyl propionate, ethyl propionate, and propyl propionate. Examples of the cyclic carboxylic acid ester include γ-butyrolactone, γ-valerolactone, and δ-valerolactone.

Examples of the chain ether include dimethoxymethane, diethoxymethane, 1,2-dimethoxyethane, 1-ethoxy-2-methoxyethane, and 1,3-dimethoxypropane. Examples of the cyclic ether include tetrahydrofuran, 2-methyltetrahydrofuran, and 3-methyltetrahydrofuran.

Examples of the organic phosphorus compound include phosphoric acid esters such as trimethyl phosphate, triethyl phosphate, and triphenyl phosphate; phosphorous acid esters such as trimethyl phosphite, triethyl phosphite, and triphenyl phosphite; and trimethylphosphine oxide. Examples of the organic sulfur compound include 1,3-propane sultone, 1,4-butane sultone, methyl methanesulfonate, sulfolane, sulfolene, dimethylsulfone, ethyl methyl sulfone, methyl phenyl sulfone, and ethyl phenyl sulfone.

Each of these compounds used as a non-aqueous solvent may have a substituent, or be a compound in which an oxygen atom is substituted with a sulfur atom. Examples of the substituent include halogen atoms such as a fluorine atom, a chlorine atom, and a bromine atom. When two or more types of compounds are used in combination as non-aqueous solvents, it is preferable to combine a compound having high relative permittivity and a relatively high viscosity such as a cyclic carbonate and a cyclic lactone with a compound having a relatively low viscosity such as a chain carbonate. In particular, the combination of ethylene carbonate and ethyl methyl carbonate or diethyl carbonate, which has a large decrease in discharge capacity associated with charge and discharge is suitable in that the formation of the coating film effectively improves the cycle characteristics.

The electrolytic solution preferably contains a carbonate such as vinylene carbonate or monofluorinated ethylene carbonate as an additive. Functional groups such as C=O, C-H, and COO are present on the surface of the negative electrode active material. These functional groups irreversibly react with the non-aqueous solvent in accordance with the battery reaction to form a surface coating film referred to as a solid electrolyte interphase (SEI) coating film. The SEI coating film exhibits an action of suppressing the decomposition of the non-aqueous solvent, but it is generated by consuming electric charges in the battery reaction, which contributes to the decreased capacity of the battery. On the other hand, if these additives are added, the SEI coating film can be formed while the decrease in capacity is suppressed. The addition amount of the additive such as vinylene carbonate is preferably 2% by mass or less per electrolytic solution. When the addition amount is in such a range, reduction in capacity or output is advantageously small when excessive vinylene carbonate or the like is oxidatively decomposed.

The electrolytic solution may contain a carboxylic acid anhydride, a sulfur compound such as 1,3-propane sultone, or a boron compound such as lithium bis(oxalate)borate (LiBOB) or trimethyl borate (TMB), or the like as an additive. The electrolytic solution may contain other additive such as an overcharge inhibitor for suppressing the overcharge of the cell, a flame retardant for improving the flame resistance (self-extinguishing property) of the electrolytic solution, a wettability improver for improving the wettability of the electrode and the separator, an additive for suppressing the elution of Mn from the positive electrode active material, or an additive for improving the ionic conductivity of the electrolytic solution. The total addition amount of these additives is preferably less than 10% by mass per electrolytic solution.

Examples of the overcharge inhibitor include biphenyl, biphenyl ether, terphenyl, methyl terphenyl, dimethyl terphenyl, cyclohexylbenzene, dicyclohexylbenzene, triphenylbenzene, and hexaphenylbenzene. As the flame retardant, for example, organic phosphorus compounds such as trimethyl phosphate and triethyl phosphate, and fluorides of the above non-aqueous solvents including boric acid esters, or the like can be used. As the wettability improver, for example, chain ethers such as 1,2-dimethoxyethane, or the like can be used.

### <Manufacturing Method>

A lithium secondary cell according to the present embodiment can be manufactured through the step of adding a boroxine compound to an electrolytic solution (non-aqueous electrolyte) so that the ratio value of the number of moles of the boroxine compound and the number of moles of transition metal atoms in a lithium-transition metal composite oxide is 5.7 × 10⁻³ or less. Specifically, the number of moles of the transition metal atoms in the lithium-transition metal composite oxide is determined to a certain value based on the specification of the electrode density of the positive electrode, the total amount of the positive electrode active material, and the composition of the positive electrode active material, or the like.

The ratio value of the number of moles of the boroxine compound in the electrolytic solution and the number of moles of the transition metal atoms in the lithium-transition metal composite oxide is preferably 1.0 × 10⁻³ or more and 5.7 × 10⁻³ or less, more preferably 1.6 × 10⁻³ or more and 5.7 × 10⁻³ or less, and still more preferably 3.2 × 10⁻³ or more and 5.7 × 10⁻³ or less.

The timing of adding the boroxine compound is not particularly limited. For example, the boroxine compound may be added as follows. A positive electrode and a negative electrode are separately prepared, and the positive electrode and the negative electrode are assembled in a cell container, followed by injecting an electrolytic solution into the cell container. The boroxine compound is then added into the cell container. Alternatively, a positive electrode and a negative electrode are respectively prepared, and an electrolytic solution containing a boroxine compound is prepared. The positive electrode and the negative electrode are assembled in a cell container, and the electrolytic solution containing the boroxine compound is injected into the cell container. Carbonates such as vinylene carbonate and monofluorinated ethylene carbonate are preferably added to the electrolytic solution together with the boroxine compound.

The lithium secondary cell according to the present embodiment can be manufactured through the step of adding a phosphate compound to an electrolytic solution (non-aqueous electrolyte) so that the ratio value of the number of moles of the phosphate compound and the number of moles of transition metal atoms in a lithium-transition metal composite oxide is 3.3 × 10⁻⁹ or less.

The ratio value of the number of moles of the phosphate compound in the electrolytic solution and the number of moles of the transition metal atoms in the lithium-transition metal composite oxide is preferably 0.5 × 10⁻³ or more and 1.6 × 10⁻³ or less, and more preferably 0.9 × 10⁻³ or more and 1.6 × 10⁻³ or less.

The timing of adding the phosphate compound is not particularly limited. For example, the phosphate compound may be added as follows. A positive electrode and a negative electrode are separately prepared, and the positive electrode and the negative electrode are assembled in a cell container, followed by injecting an electrolytic solution into the cell container. The phosphate compound is then added into the cell container. Alternatively, a positive electrode and a negative electrode are respectively prepared, and an electrolytic solution containing a phosphate compound is prepared. The positive electrode and the negative electrode are assembled in a cell container, and the electrolytic solution containing the phosphate compound is injected into the cell container. Carbonates such as vinylene carbonate and monofluorinated ethylene carbonate are preferably added to the electrolytic solution together with the phosphate compound. Both the boroxine compound and the phosphate compound may be added to the electrolytic solution within ranges where the ratios of the numbers of moles of the compounds with respect to the lithium-transition metal composite oxide are satisfied.

In the above embodiment, the electrode group and the cell container 13 are formed in a cylindrical shape. However, the electrode group may have any of various forms exemplified by a form in which an electrode is wound in a flat circular shape, a form in which rectangular electrodes are stacked, or a form in which bag-like separators containing electrodes are stacked to form a multilayer structure. The cell container 13 can have an appropriate shape such as a cylindrical shape, a flattened elliptical shape, an oblong elliptical shape, a rectangular shape, a coin shape, or a button shape according to the form of the electrode group. The cell container 13 may not include the axial core 21.

### [Examples]

Hereinafter, the present invention will be specifically described with reference to Examples, but the technical scope of the present invention is not limited thereto.

As Example of the present invention, a lithium secondary cell in which the amount of a boroxine compound to be added to an electrolytic solution was defined based on the amount of a positive electrode active material, and a lithium secondary cell in which the amount of a phosphate compound to be added to an electrolytic solution was defined based on the amount of the positive electrode active material were prepared, and the cycle characteristics of the lithium secondary cells were evaluated.

### <Negative Electrode>

A negative electrode of the lithium secondary cell was prepared by using natural graphite as a negative electrode active material. The natural graphite thus used had an average particle size of 20 µm, a specific surface area of 5.0 m²/g, and a spacing of 0.368 nm. As a binder, a water swollen body of carboxymethyl cellulose and a styrene-butadiene copolymer were used. As a negative electrode current collector, a rolled copper foil having a thickness of 10 µm was used.

The negative electrode was prepared according to the following procedure. First, an aqueous dispersion containing a negative electrode active material, carboxymethyl cellulose, and a styrene-butadiene copolymer at a mass ratio of 97 : 1.5 : 1.5 was mechanically kneaded by a stirring device equipped with stirring blades to prepare a slurry-like negative electrode mixture. Next, the obtained negative electrode mixture was uniformly coated on the negative electrode current collector, and dried. The negative electrode mixture was coated on both the surfaces of the negative electrode current collector according to the same procedure. The negative electrode mixture coated on both the surfaces of the negative electrode current collector was subjected to compression molding by a roll press so that the electrode density of the negative electrode was about 1.5 g/cm³. Subsequently, the negative electrode current collector on which the negative electrode mixture layer was formed was cut so that the length of the negative electrode current collector was 60 cm (in total) (the length of the coated portion of the negative electrode mixture layer: 54 cm, the length of the uncoated portion: 5 cm), and the coating width was 5.6 cm. Thereafter, a lead piece made of nickel was welded to the uncoated portion of the cut negative electrode current collector to obtain a negative electrode for a lithium secondary cell.

### <Positive Electrode>

A positive electrode of the lithium secondary cell was prepared by using a lithium-transition metal composite oxide represented by Li_{1.02}Mn_{1.98}Al_{0.02}O₄ as a positive electrode active material. The positive electrode active material thus used had an average particle size of 10 µm and a specific surface area of 1.5 m²/g. As a conductive agent, a mixture in which massive graphite and acetylene black were mixed at a mass ratio of 9 : 2 was used. As a binder, polyvinylidene fluoride (PVDF) was used. PVDF was used in a state where it was previously dissolved in N-methyl-2-pyrrolidone (NMP) so as to have a concentration of 5% by mass. As a positive electrode current collector, an aluminum foil having a thickness of 20 µm was used.

The positive electrode was prepared according to the following procedure. First, an NMP solution containing a positive electrode active material, a conductive agent, and a binder at a mass ratio of 85 : 10 : 5 was mechanically kneaded by a stirring device equipped with stirring blades to prepare a slurry-like positive electrode mixture. Next, the obtained positive electrode mixture was uniformly coated on the positive electrode current collector, and dried. The positive electrode mixture was coated on both the surfaces of the positive electrode current collector according to the same procedure. The positive electrode mixture coated on both the surfaces of the positive electrode current collector was subjected to compression molding by a roll press so that the electrode density of the positive electrode was about 2.65 ± 0.2 g/cm³. Subsequently, the positive electrode current collector on which the positive electrode mixture layer was formed was cut so that the length of the positive electrode current collector was 55 cm (in total) (the length of the coated portion of the positive electrode mixture: 50 cm, the length of the uncoated portion: 5 cm). Thereafter, a lead piece made of aluminum foil was welded to the uncoated portion of the cut positive electrode current collector to obtain a positive electrode for a lithium secondary cell. The total amount of the positive electrode active material per positive electrode of the prepared lithium secondary cell is 8.5 ± 0.2 g.

### <Electrolytic Solution>

An electrolytic solution was prepared by adding triisopropoxyboroxine (TiPBx), trimethylboroxine (TriMeBx) or trimethoxyboroxine (TriMOBx) as a boroxine compound, or a difluorophosphate anion (PO₂F₂⁻) as a phosphate compound. As a non-aqueous solvent, a mixed solution obtained by mixing ethylene carbonate (EC) and ethyl methyl carbonate (EMC) at a mass ratio of 1 : 2 was used. As an electrolyte, lithium hexafluorophosphate (LiPF₆) was used in an amount of 1.0 mol/L. The boroxine compound or the phosphate compound was used in a state where it was dissolved in a non-aqueous solvent so that the ratio value of the number of moles thereof and the number of moles of oxygen atoms in the positive electrode active material was a predetermined value. The total amount of the electrolytic solution is 7.2 ± 0.2 g.

### <Lithium Secondary Cell>

The lithium secondary cell had a cylindrical form shown in FIG. 1. Specifically, a positive electrode current collecting tab and a negative electrode current collecting tab for drawing out a current having the same material as each of the prepared positive electrode and negative electrode were ultrasonically welded to the positive electrode and negative electrode. The positive electrode and the negative electrode were stacked with a separator interposed therebetween. The separator was a single layer film made of polyethylene. The stacked product was spirally wound to form an electrode group, which was housed in a cylindrical cell container having a diameter of 18 mm and a length of 650 mm. Thereafter, an electrolytic solution was injected into each cell container, and a sealing cell lid was brought into close contact with the cell container with a gasket interposed therebetween. The cell container was hermetically sealed by caulking to obtain a lithium secondary cell.

### (Test Cell 1)

As a test cell 1, a lithium secondary cell was prepared, in which the ratio value of the number of moles of triisopropoxyboroxine (TiPBx) and the number of moles of transition metal atoms in a lithium-transition metal composite oxide was 1.6 × 10⁻³.

### (Test Cell 2)

As a test cell 2, a lithium secondary cell was prepared, in which the ratio value of the number of moles of triisopropoxyboroxine (TiPBx) and the number of moles of transition metal atoms in a lithium-transition metal composite oxide was 3.2 × 10⁻³.

### (Test Cell 3)

As a test cell 3, a lithium secondary cell was prepared, in which the ratio value of the number of moles of triisopropoxyboroxine (TiPBx) and the number of moles of transition metal atoms in a lithium-transition metal composite oxide was 5.7 × 10⁻³.

### (Test Cell 4)

As a test cell 4, a lithium secondary cell was prepared, in which the ratio value of the number of moles of triisopropoxyboroxine (TiPBx) and the number of moles of transition metal atoms in a lithium-transition metal composite oxide was 1.6 × 10⁻³, and vinylene carbonate (VC) was added at a concentration of 1.0% by mass per electrolytic solution.

### (Test Cell 5)

As a test cell 5, a lithium secondary cell was prepared, in which the ratio value of the number of moles of triisopropoxyboroxine (TiPBx) and the number of moles of transition metal atoms in a lithium-transition metal composite oxide was 3.2 × 10⁻³, and vinylene carbonate (VC) was added at a concentration of 1.0% by mass per electrolytic solution.

### (Test Cell 6)

As a test cell 6, a lithium secondary cell was prepared, in which the ratio value of the number of moles of triisopropoxyboroxine (TiPBx) and the number of moles of transition metal atoms in a lithium-transition metal composite oxide was 5.7 × 10⁻³, and vinylene carbonate (VC) was added at a concentration of 1.0% by mass per electrolytic solution.

### (Test Cell 7)

As a test cell 7, a lithium secondary cell was prepared, in which the ratio value of the number of moles of trimethylboroxine (TriMeBx) and the number of moles of transition metal atoms in a lithium-transition metal composite oxide was 4.7 × 10⁻³.

### (Test Cell 8)

As a test cell 8, a lithium secondary cell was prepared, in which the ratio value of the number of moles of trimethoxyboroxine (TriMOBx) and the number of moles of transition metal atoms in a lithium-transition metal composite oxide was 6.5 × 10⁻³.

### (Test Cell 9)

As a test cell 9, a lithium secondary cell was prepared, in which the ratio value of the number of moles of a difluorophosphate anion (PO₂F₂⁻) and the number of moles of transition metal atoms in a lithium-transition metal composite oxide was 0.5 × 10⁻³.

### (Test Cell 10)

As a test cell 10, a lithium secondary cell was prepared, in which the ratio value of the number of moles of a difluorophosphate anion (PO₂F₂⁻) and the number of moles of transition metal atoms in a lithium-transition metal composite oxide was 0.9 × 10⁻³.

### (Test Cell 11)

As a test cell 11, a lithium secondary cell was prepared, in which the ratio value of the number of moles of a difluorophosphate anion (PO₂F₂⁻) and the number of moles of transition metal atoms in a lithium-transition metal composite oxide was 1.6 × 10⁻³.

### (Test Cell 12)

As a test cell 12, a lithium secondary cell was prepared, in which the ratio value of the number of moles of a difluorophosphate anion (PO₂F₂⁻) and the number of moles of transition metal atoms in a lithium-transition metal composite oxide was 0.5 × 10⁻³, and vinylene carbonate (VC) was added at a concentration of 1.0% by mass per electrolytic solution.

### (Test Cell 13)

As a test cell 13, a lithium secondary cell was prepared, in which the ratio value of the number of moles of a difluorophosphate anion (PO₂F₂⁻) and the number of moles of transition metal atoms in a lithium-transition metal composite oxide was 0.9 × 10⁻³, and vinylene carbonate (VC) was added at a concentration of 1.0% by mass per electrolytic solution.

### (Test Cell 14)

As a test cell 14, a lithium secondary cell was prepared, in which the ratio value of the number of moles of a difluorophosphate anion (PO₂F₂⁻) and the number of moles of transition metal atoms in a lithium-transition metal composite oxide was 1.6 × 10⁻³, and vinylene carbonate (VC) was added at a concentration of 1.0% by mass per electrolytic solution.

### (Test Cell 15)

As a test cell 15, a lithium secondary cell was prepared, which did not contain a boroxine compound and a phosphate compound.

### (Test Cell 16)

As a test cell 16, a lithium secondary cell was prepared, in which vinylene carbonate (VC) was added at a concentration of 1.0% by mass per electrolytic solution without adding a boroxine compound and a phosphate compound.

### (Test Cell 17)

As a test cell 17, a lithium secondary cell was prepared, in which the ratio value of the number of moles of a boroxine compound and the number of moles of transition metal atoms in a lithium-transition metal composite oxide was 9.5 × 10⁻³. The addition amount of the boroxine compound per electrolytic solution was 0.19% by weight.

### (Test Cell 18)

As a test cell 18, a lithium secondary cell was prepared, in which the ratio value of the number of moles of a difluorophosphate anion (PO₂F₂⁻) and the number of moles of transition metal atoms in a lithium-transition metal composite oxide was 2.7 × 10⁻³.

### (Test Cell 19)

As a test cell 19, a lithium secondary cell was prepared, in which the ratio value of the number of moles of a difluorophosphate anion (PO₂F₂⁻) and the number of moles of transition metal atoms in a lithium-transition metal composite oxide was 2.7 × 10⁻³, and vinylene carbonate (VC) was added at a concentration of 1.0% by mass per electrolytic solution.

### (Evaluation of Test Cells)

A capacity retention rate associated with the charge and discharge cycle was measured for each of the prepared test cells, and the cycle characteristics were evaluated. The charge and discharge of the lithium secondary cell were repeated according to the following procedure, and the retention rate of discharge capacity after a charge and discharge cycle test with respect to initial discharge capacity was calculated.

Specifically, first, the lithium secondary cell was charged at a constant charge current of 1500 mA and a constant charge voltage of 4.2 V for 3 hours in a thermostatic chamber kept at 25°C. Subsequently, after pausing for 5 hours, the lithium secondary cell was discharged at a constant discharge current of 1500 mA until a final voltage of 3.0 V. Under the same conditions as the charge/discharge conditions, a total of three cycles of charge and discharge were repeated. At this time, the discharge capacity at the third cycle was determined as the initial discharge capacity.

Subsequently, the lithium secondary cell whose the initial discharge capacity was measured was charged at a constant charge current of 1500 mA and a constant charge voltage of 4.2 V for 5 hours. Subsequently, after pausing for 5 hours, the lithium secondary cell was discharged at a constant discharge current of 1500 mA until a final voltage of 3.0 V. Hereinafter, a total of 500 cycles of charge and discharge were repeated under the same conditions as the charge/discharge conditions. Thereafter, the discharge capacity at the 500th cycle was obtained as the discharge capacity after the test.

The results of measurement of the capacity retention rate are shown in Table below. The "capacity retention rate" in Table is a relative value (%) with the initial discharge capacity measured at the third cycle being 100. "-" indicates that each component is not added.

**[Table 1]**

| | Additive | Molar ratio of the additive | Addition amount of VC (wt%) | Capacity Retention Rate (%) |
|---|---|---|---|---|
| Test Cell 1 | TiPBx | 1.6×10⁻³ | - | 65 |
| Test Cell 2 | TiPBx | 3.2×10⁻³ | - | 74 |
| Test Cell 3 | TiPBx | 5.7×10⁻³ | - | 71 |
| Test Cell 4 | TiPBx | 1.6×10⁻³ | 1 | 71 |
| Test Cell 5 | TiPBx | 3.2×10⁻³ | 1 | 83 |
| Test Cell 6 | TiPBx | 5.7×10⁻³ | 1 | 87 |
| Test Cell 7 | TriMeBx | 4.7×10⁻³ | - | 58 |
| Test Cell 8 | TriMOBx | 6.5×10⁻³ | - | 61 |
| Test Cell 9 | PO₂F₂⁻ | 0.5×10⁻³ | - | 69 |
| Test Cell 10 | PO₂F₂⁻ | 0.9×10⁻³ | - | 73 |
| Test Cell 11 | PO₂F₂⁻ | 1.6×10⁻³ | - | 77 |
| Test Cell 12 | PO₂F₂⁻ | 0.5×10⁻³ | 1 | 84 |
| Test Cell 13 | PO₂F₂⁻ | 0.9×10⁻³ | 1 | 85 |
| Test Cell 14 | PO₂F₂⁻ | 1.6×10⁻³ | 1 | 87 |
| Test Cell 15 | - | - | - | 62 |
| Test Cell 16 | - | - | 1 | 64 |
| Test Cell 17 | TiPBx | 9.5×10⁻³ | 1 | 52 |
| Test Cell 18 | PO₂F₂⁻ | 2.7×10⁻³ | - | 48 |
| Test Cell 19 | PO₂F₂⁻ | 2.7×10⁻³ | 1 | 51 |

As shown in Table 1, in the test cell 15 in which the boroxine compound, the phosphate compound (PO₂F₂⁻), and vinylene carbonate (VC) were not added, the capacity retention rate was as low as 62%. The capacity retention rate of the test cell 16 in which only vinylene carbonate (VC) was added without adding the boroxine compound and the phosphate compound (PO₂F₂⁻) was improved as compared with the test cell 15, but the capacity retention rate was improved by only 2 points.

On the other hand, the capacity retention ratio of each of the test cells 1 to 3 in which the boroxine compound (TiPBx) was added was 65% to 74%, which was improved by 3 to 12 points as compared with the test cell 15. The capacity retention ratio of each of the test cells 4 to 6 in which vinylene carbonate (VC) was added in addition to the boroxine compound (TiPBx) was 71% to 87%, which was further improved as compared with the test cells 1 to 3.

The test cell 3 having improved capacity retention rate was disassembled, and the electronic state of the surface layer of the positive electrode active material was analyzed by X-ray photoelectron spectroscopy. The shift of the oxidation number was detected for a part of transition metals present on the surface of the positive electrode active material. It was accordingly found that, when other analyses such as mass spectrometry were carried out, fluorine atoms were bonded to a part of the transition metals present on the surface of the positive electrode active material, and an atomic group having a B-O bond interacted with the other part of the transition metals. On the other hand, in the test cells 15 to 16 in which the boroxine compound (TiPBx) and the phosphate compound (PO₂F₂⁻) were not added, no such change or the like in the surface layer was observed.

Therefore, in the test cells 1 to 6, it is considered that the surface of the positive electrode active material is modified with the boroxine compound, whereby the reaction environment between the positive electrode active material and the non-aqueous solvent changes, which provided suppressed decomposition or the like of the non-aqueous solvent, thereby improving the cycle characteristics. It is considered that, by using vinylene carbonate in combination, the reduction decomposition of the non-aqueous solvent in the negative electrode is suppressed to cause the formation reaction of the coating film derived from vinylene carbonate proceeds first, thereby suppressing the decomposition of the boroxine compound and the change in the physical properties of the electrolytic solution.

On the other hand, in the test cell 17 in which the boroxine compound (TiPBx) was excessively added with respect to the amount of the positive electrode active material, the capacity retention rate was 52%, which was reduced by 10 points as compared with the test cell 15. This capacity retention rate is lower than that of each of the test cells 4 to 6. Therefore, when the ratio value of the number of moles of the boroxine compound and the number of moles of the transition metal atoms in the positive electrode active material is in the range of 1.6 × 10⁻³ or more and 5.7 × 10⁻³ or less, the optimum value of the addition amount of the boroxine compound can be said to be present. It is considered that, when the boroxine compound is excessively added, the coating film thickly deposits on the interface between the positive electrode active material and the electrolytic solution to act as the resistance of the conduction of lithium ions.

In the test cells 9 to 11 in which the phosphate compound (PO₂F₂⁻) was added, the capacity retention ratio was 69% to 77%, which was improved by 7 to 15 points as compared with the test cell 15. The capacity retention ratio of each of the test cells 12 to 14 in which vinylene carbonate (VC) was added in addition to the phosphate compound (PO₂F₂⁻) was 84% to 87%, which was further improved as compared with the test cells 9 to 11.

Likewise, when the test cell having an improved capacity retention rate was disassembled, and the electronic state of the surface layer of the positive electrode active material was analyzed by photoelectron spectroscopy, the shift of the oxidation number of a part of the transition metals present on the surface of the positive electrode active material was detected. It was accordingly found that, when other analyses such as mass spectrometry were performed, the fluorine atoms were bonded to a part of the transition metals present on the surface of the positive electrode active material.

Therefore, it is considered that, also in the test cells 9 to 14, by modify the surface of the positive electrode active material with the phosphate compound, the reaction environment between the positive electrode active material and the non-aqueous solvent changes, which provides suppressed decomposition or the like of the non-aqueous solvent, thereby improving the cycle characteristics. It is considered that, by using vinylene carbonate in combination, the same effect as that in the case of adding the boroxine compound is provided.

On the other hand, in the test cells 18 and 19 in which the phosphate compound (PO₂F₂⁻) was excessively added with respect to the amount of the positive electrode active material, the capacity retention ratio was 48% to 51%, which was reduced by 11 to 14 points as compared with the test cell 15. Therefore, when the ratio value of the number of moles of the phosphate compound and the number of moles of the transition metal atoms in the positive electrode active material is in the range of 0.5 × 10⁻³ or more and 1.6 × 10⁻³ or less, the optimum value of the addition amount of the phosphate compound can be said to be present. It is considered that, when the phosphate compound is excessively added, the coating film thickly deposits to act as the resistance of the conduction of the lithium ions, as in the case of adding the boroxine compound.

In the test cells 7 and 8 in which trimethylboroxine (TriMeBx) or' trimethoxyboroxine (TriMOBx) was added as the boroxine compound, the capacity retention rate was 58% to 61%, which was reduced as compared with the test cell 15. Therefore, it can be said that the boroxine compound is preferably a compound having 2 to 6 carbon atoms, and particularly preferably triisopropoxyboroxine (TiPBx).

### Reference Signs List

- 1: lithium secondary cell
- 10: positive electrode
- 11: separator
- 12: negative electrode
- 13: cell container
- 14: positive electrode current collecting tab
- 15: negative electrode current collecting tab
- 16: inner lid
- 17: inner pressure relief valve
- 18: gasket
- 19: positive temperature coefficient resistor element
- 20: cell lid
- 21: axial core

## Claims

1. A lithium secondary cell comprising:
a positive electrode containing a lithium-transition metal composite oxide for which lithium ions can be reversibly stored and released;
a negative electrode; and
a non-aqueous electrolyte,
wherein:
the non-aqueous electrolyte contains a boroxine compound represented by the general formula: (RO)₃(BO)₃, wherein R each independently represents a C2-6 organic group; and
a ratio of the number of moles of the boroxine compound and the number of moles of transition metal atoms in the lithium-transition metal composite oxide is 5.7 × 10⁻³ or less.

2. The lithium secondary cell according to claim 1, wherein the ratio of the number of moles of the boroxine compound and the number of moles of the transition metal atoms in the lithium-transition metal composite oxide is 1.0 × 10⁻³ or more and 5.7 × 10⁻³ or less.

3. The lithium secondary cell according to claim 1 or 2, wherein a part of a surface of the lithium-transition metal composite oxide is fluorinated.

4. The lithium secondary cell according to any one of claims 1 to 3, wherein a part of a surface of the lithium-transition metal composite oxide contains a boron atom.

5. The lithium secondary cell according to any one of claims 1 to 4, wherein the non-aqueous electrolyte further contains vinylene carbonate.

6. The lithium secondary cell according to any one of claims 1 to 5, wherein the non-aqueous electrolyte contains a phosphate compound represented by the general formula: POₓF_{y}.

7. The lithium secondary cell according to any one of claims 1 to 6, wherein the boroxine compound is triisopropoxyboroxine.

8. A lithium secondary cell comprising:
a positive electrode containing a lithium-transition metal composite oxide for which lithium ions can be reversibly stored and released;
a negative electrode; and
a non-aqueous electrolyte,
wherein:
the non-aqueous electrolyte contains a phosphate compound represented by the general formula: POₓF_{y}; and
a ratio of the number of moles of the phosphate compound and the number of moles of transition metal atoms in the lithium-transition metal composite oxide is 1.6 × 10⁻³ or less.

9. The lithium secondary cell according to claim 8, wherein the ratio of the number of moles of the phosphate compound and the number of moles of the transition metal atoms in the lithium-transition metal composite oxide is 0.5 × 10⁻³ or more and 1.6 × 10⁻³ or less.

10. The lithium secondary cell according to claim 8 or 9, wherein a part of a surface of the lithium-transition metal composite oxide is fluorinated.

11. The lithium secondary cell according to any one of claims 8 to 10, wherein the non-aqueous electrolyte further contains vinylene carbonate.

12. A method for manufacturing a lithium secondary cell,
the lithium secondary cell comprising:
a positive electrode containing a lithium-transition metal composite oxide for which lithium ions can be reversibly stored and released;
a negative electrode; and
a non-aqueous electrolyte,
the method comprising the step of adding a boroxine compound represented by the general formula: (RO)₃(BO)₃, wherein R each independently represents a C2-6 organic group to the non-aqueous electrolyte so that a ratio of the number of moles of the boroxine compound and the number of moles of transition metal atoms in the lithium-transition metal composite oxide is 5.7 × 10⁻³ or less.
